# EUROPEAN PATENT APPLICATION

(11) **EP 4 321 520 A1**
(43) Date of publication of application: **14.02.2024**
(21) Application number: 22306210.0
(22) Date of filing: 10.08.2022
(51) Int. Cl.: C07K 1/00, C08G 69/10, C08J 3/05, C08K 3/16, C08L 77/04

(54) **SYNTHETIC POLYMERS AND COPOLYMERS WITH HYSTERESIS PROPERTIES**

(71) Applicant: Institut Polytechnique de Bordeaux, 33400 Talence (FR); Université de Bordeaux, 33000 Bordeaux (FR); Centre national de la recherche scientifique, 75016 Paris (FR)
(72) Inventor: BONDUELLE, Colin, 33380 MARCHEPRIME (FR); HARRISSON, Simon, 33140 CADAUJAC (FR); LECOMMANDOUX, Sébastien, 33610 CANEJAN (FR); BADRELDIN, Mostafa, 33400 TALENCE (FR); LE SCOUARNEC, Rosanna, 56850 CAUDAN (FR)
(74) Representative: Lavoix

(57) **Abstract**

The present invention concerns an aqueous solution comprising at least one synthetic (co)polymer, wherein said (co)polymer comprises at least one (L)-proline or (D)-proline monomer unit, wherein said (co)polymer exhibits a temperature-driven phase change involving aggregation on heating which is reversible on cooling and has a hysteresis greater than or equal to 20°C.

## Description

The present invention concerns synthetic polymers and copolymers, which exhibit modulating and reversible temperature-driven phase change in water with hysteresis.

In polymer science, phase separation is an essential property in most formulation processes: for instance, solutions of thermoresponsive polymers undergo phase separation in response to changes in temperature, an interesting property to develop new solutions in drug delivery, nanotechnology, tissue engineering and biotechnology.

Polymers that exhibit a lower critical solution temperature (LCST) in water are miscible with water at all concentrations below the LCST, while above the LCST aggregation may occur to create two immiscible phases in thermodynamic equilibrium (P. Paricaud, A. Galindo, G. Jackson, Mol. Phys. 2003, 101, 2575-2600). For any specific concentration, the point at which phase separation occurs is known as the cloud point temperature (*T*_{CP}, where *T*_{CP} ≥ LCST).

Several methods are described in the literature to formulate aqueous solutions of heat-sensitive polymers. The known methods consist in using non-biodegradable polymer such as PNIPAM in solution, which is the most used and described polymer with LCST properties (US 2006/0128916). These polymers are widely used for various applications such as catalysis, biomedical sensors or water treatment. However, LCST polymers exhibit small thermal hysteresis in their phase separation behavior, even though this could prove to be a key parameter in designing or programming phase separation driven assemblies (coacervation, etc.). In living systems, such behavior has recently been established for intrinsically disordered proteins: specific recombinantly produced sequences of elastin spanning a wide range of molar mass can display hysteretic LCST, which hold many promises to engineer advanced materials (F. G. Quiroz, N. K. Li, S. Roberts, P. Weber, M. Dzuricky, I. Weitzhandler, Y. G. Yingling, A. Chilkoti, Sci. Adv. 2019, 5, 1-12.).

Thus there is a need to find biosourced and economically heat-sensitive polymers that could be formulated in aqueous solutions and that exhibit a large hysteresis in their phase separation behavior in aqueous solutions.

The aim of the present invention is thus to provide polymers or copolymers with a modulating and reversible temperature phase change with hysteresis.

Another aim of the present invention is to provide a process involving the use of polymers or copolymers whose aggregation properties allow to qualitatively and quantitatively follow the temperature to which an object has been exposed.

Therefore the present invention relates to an aqueous solution comprising at least one (co)polymer, wherein said (co)polymer comprises at least one (L)-proline or (D)-proline monomer unit, wherein said (co)polymer exhibits a temperature-driven phase change involving aggregation on heating which is reversible on cooling and has a hysteresis greater than or equal to 20°C.

According to the invention, the term "(co)polymer" indifferently refers to a polymer or a copolymer. Typically, said (co)polymer with a temperature-driven phase change is a (co)polymer, which exhibits a phase separation when the temperature raises over its cloud point temperature (T_{cp}).

In other words, said phase separation corresponds to the aggregation of the (co)polymer in the solution, said aggregation corresponds to a state wherein said (co)polymer coexists in two immiscible phases in thermodynamic equilibrium in the aqueous solution.

Typically, the cloud point temperature of said (co)polymer corresponds to the temperature where the aggregation of the (co)polymer in solution occurred.

Typically, when the temperature reaches the cloud point temperature of the (co)polymer in the aqueous solution, the (co)polymer starts to aggregate and the aqueous solution becomes turbid. This turbidity can be detected visually or by measuring the optical transmission at a given wavelength in the ultraviolet or visible range.

According to the invention, the aqueous solution becomes turbid means that the transmission of visible or ultraviolet light falls below 50%.

In various embodiments, the cloud point temperature of said (co)polymer is from 5°C to 90°C, and ideally from 20°C to 70°C.

Typically, the expression "the (co)polymer exhibits a temperature-driven phase change, which is reversible on cooling" means that the (co)polymer can be entirely dissolved, after few minutes, in the aqueous solution when the temperature is decreased below the clearing point temperature (T_{cl}) of said (co)polymer.

According to the invention, T_{cl} corresponds to the temperature at which the (co)polymer is entirely dissolved in the aqueous solution, giving a clear solution with an optical transmission of >90%.

Typically, when the temperature is cooled below the T_{cl}, the aqueous solution becomes clear. Preferably, the clearing point temperature of said (co)polymer is from 25°C to -10°C, and ideally from 15°C to 0°C.

According to the invention, the aqueous solution becomes clear means that the optical transmission of the solution is greater than 90% in the visible wavelengths (400 to 800 nm).

Typically, the (co)polymer exhibits hysteresis properties in solution when the T_{cp} and the T_{cl} of said (co)polymer in the aqueous solution are different, preferably when T_{cp} is higher than T_{cl}.

Preferably, the difference between the cloud point temperature and the clearing point temperature of the (co)polymer in the aqueous solution according to the invention is greater than 20°C. More preferably, the difference between the cloud point temperature and the clearing point temperature of the (co)polymer in the aqueous solution according to the invention is greater than.50°C..

In an embodiment, the aqueous solution of the invention is a suspension of the (co)polymer as defined above in water. In an embodiment, the concentration of the (co)polymer in the aqueous solution is from 0.1 mg.mL⁻¹ to 200 mg.mL⁻¹. Preferably, the concentration of the (co)polymer in the aqueous solution is 0.5 to 20 mg.mL⁻¹, more preferably 5 mg.mL⁻¹.

According to an embodiment, the aqueous solution as defined above further comprises at least one salt. Typically, the salt consists in a combination of an anion and a cation. Preferably, the anion is selected from the group consisting of: F⁻, SO₄²⁻, HPO₄²⁻, C₂H₃O²⁻, Cl⁻, Br⁻, NO³⁻, ClO³⁻, I⁻, ClO⁴⁻, SCN,⁻ and mixtures thereof.

The cation may be selected from the group consisting of: NH₄⁺, K⁺, Na⁺, Li⁺, Mg²⁺, Ca²⁺, guanidinium, and mixtures thereof.

According to an embodiment, the salt is a combination of an anion selected from the group consisting of: F⁻, SO₄²⁻, HPO₄²⁻, C₂H₃O²⁻, Cl⁻, Br⁻, NO³⁻, ClO³⁻, I⁻, ClO⁴⁻, and SCN⁻, and a cation selected from the group consisting of: NH₄⁺, K⁺, Na⁺, Li⁺, Mg²⁺, Ca²⁺, and guanidinium. For example, the salt is calcium chloride (Ca₂Cl₂), sodium chlodride (NaCl) or ammonium sulfate (NH₄SO₄).

According to an embodiment, the salt is sodium chloride.

Typically, the cloud point temperature of the (co)polymer in the aqueous solution is varying with the salt concentration. The higher the salt concentration, the lower the cloud point temperature of the (co)polymer in the aqueous solution.

In an embodiment, the concentration of the salt in the aqueous solution as defined above is less than 3M, and is preferably from 0.01 M to 3M, and in particular from 0.01 M to 1M.

As mentioned above, the (co)polymer according to the invention comprises at least one (L)-proline or (D)-proline monomer unit.

Advantageously, the (co)polymer according to the invention is a synthetic and biodegradable polypeptide obtained by ring-opening polymerization (ROP) of L-proline N-carboxyanhydride (L-Pro-NCA) or D-proline N-carboxyanhydride.

Preferably, the (co)polymer as defined above comprises the following moiety: 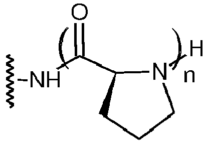 wherein n is an integer from 10 to 1000, more preferably from 20 to 500.

According to an embodiment, the (co)polymer has the formula (I): 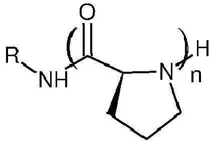 wherein:
- n is an integer from 10 to 1000, more preferably from 20 to 500; and
- R is an aromatic, cycloaliphatic, heterocyclic or aliphatic group.

According to an embodiment, R may represent a cyclic or acyclic, substituted or unsubstituted, linear or branched (C₁-C₁₂)alkyl, (C₁-C₁₂)alkenyl,(C₂-C₁₂)alkynyl, (C₁-C₁₂)heteroalkyl, (C₂-C₁₂)heteroalkenyl, (C₂-C₁₂)heteroalkynyl, substituted or unsubstituted (C₆-C₁₀)aryl or (C₄-C₁₀)heteroaryl. For example, R represents allyl, n-hexyl, n-decyl, n-dodecyl or n-octadecyl.

According to an embodiment, R in formula (I) as defined above is a linear or branched (C₁-C₆)alkyl group, optionally interrupted by at least one oxygen atom, wherein said (C₁-C₆)alkyl group is optionally substituted with at least one substituent selected from the group consisting of: hydroxyl, (C₆-C₁₀)aryl group, and (C₁-C₆)alkoxy group, said (C₁-C₆)alkyl group being optionally interrupted with one or several oxyethylene group(s) or interrupted with at least one double bond.

Preferably, R in formula (I) is hexyl, allyl, benzyl or -CH₂CH₂OCH₂CH₂OH group or a polyethylene glycol moiety -(OCH₂CH₂)ₘ, m being an integer comprised between 2 and 250. More preferably, R is hexyl, allyl or -CH₂CH₂OCH₂CH₂OH group.

According to the invention, an "alkyl group" corresponds to a linear or branched, saturated, hydrocarbon-based aliphatic group from 1 to 18 carbon atoms, unless otherwise mentioned. For example, alkyl group may be a methyl, ethyl, n-propyl, isopropyl, butyl, isobutyl, n-hexyl, n-octyl, n-dodecyl or n-octadecyl.

According to the invention, a "heteroalkyl group" corresponds to an alkyl group as previously defined containing at least one heteroatom selected from O, S or N.

According to the invention, "an alkoxy group" corresponds to an -O-alkyl radical where the alkyl group is as previously defined.

According to the invention, an "alkenyl group" corresponds to a linear or branched unsaturated hydrocarbon-based aliphatic group from 1 to 12 carbon atoms having one or more carbon double bonds, unless otherwise mentioned.

According to the invention, a "heteroalkenyl group" corresponds to an alkenyl group as previously described containing at least one heteroatom selected from O, S or N.

According to the invention, an "alkynyl group" corresponds to a linear or branched unsaturated hydrocarbon-based aliphatic group from 1 to 12 carbon atoms having one or more carbon triple bonds, unless otherwise mentioned.

According to the invention, a "heteroalkynyl group" corresponds to an alkynyl group as previously described containing at least one heteroatom selected from O, S or N.

According to the invention, "aryl group" corresponds a cyclic aromatic group comprising between 6 and 10 carbon atoms, unless otherwise mentioned. By the way of example of aryl group, mention may be made of phenyl group.

According to the invention, a "heteroaryl group" corresponds to a cyclic aromatic group comprising between 6 and 10 carbon atoms, unless otherwise mentioned, and containing at least one heteroatom selected from O, S or N.

In an embodiment, R represents an indicator dye.

According to the invention, an indicator dye is a chemical substance which takes a characteristic color in the presence of a certain amount of another chemical substance in the solution or which takes a characteristic color upon aggregation. Typically, indicator dye may be represented by a cyclodextrin complexed with a photoactive molecule such as rhodamine, nitrobenzofurazan or by organic dyes with aggregation induced emission properties such as pyrene or Nile red.

In another embodiment, the (co)polymer is a synthetic polypeptide comprising multiple natural, synthetic or modified amino acid units. Preferably, the (co)polymer is a polypeptide made of (L)-proline and glycine.

In an embodiment, the (co)polymer is a polymer having the following formula (II): 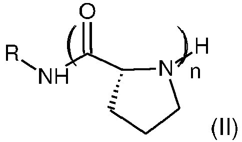 wherein n and R are as defined above in formula (I).

According to an embodiment, R is an hexyl group and n is equal to 100.

According to an embodiment, the (co)polymer is a copolymer having the following formula (III): 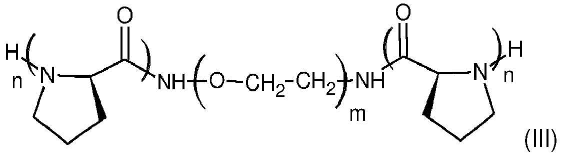 wherein n, m and R being as defined above in formula (I).

Preferably, the molecular weight of the (co)polymer is from 900 g.mol⁻¹ to 200 000 g.mol⁻¹, more preferably from 1 900 g.mol⁻¹ to 50 000 g.mol⁻¹

According to an embodiment, the degree of polymerization (DP) of the (co)polymer is from 10 to 1 000, preferably from 20 to 500.

The present invention also relates to the use of a (co)polymer comprising at least one (L)-proline or (D)-proline unit as defined above as a thermometer, for measuring the maximal temperature at which the aqueous solution as defined above has been put.

The present invention also relates to a device for measuring the maximal temperature at which an object has been put, using the (co)polymer as defined above. More precisely, the device is a thermometer.

The present invention relates to a device for measuring the temperature at which an object has been put, said device including at least one well filled with the aqueous solution as defined above, said solution containing optionally at least one salt as defined above.

The thermometer according to the invention includes at least one well filled with an aqueous solution containing the (co)polymer as defined above at a concentration Cₚₒₗ as well as at least one salt as defined above at a concentration Cₓ such that the (co)polymer aggregates at the temperature which is required to be measured. Higher salt concentrations give lower aggregation temperatures. When multiple solutions are used, multiple salt concentrations may be selected in order to measure different temperatures.

According to the invention, the concentration Cₓ of salt as defined above is different for each well.

According to an embodiment, the device includes 1-20 wells, more preferably 6 wells.

Advantageously, the aqueous solutions comprising the (co)polymer as defined above can subsequently be reset by cooling them to below their clearing point temperature, where the difference between the clearing point temperature and the aggregation temperature corresponds to the hysteresis of the (co)polymer. At this temperature, the (co)polymer becomes soluble and the aqueous solution becomes clear.

The present invention also relates to a process for measuring the maximal temperature at which an object has been exposed, said process comprising the use of at least one (co)polymer comprising at least one (L)-proline or (D)-proline monomer unit, said (co)polymer being as defined above.

The process according to the invention may include the use of the device or thermometer as defined above.

According to the invention, the process comprises at least one step wherein the wells of the device as mentioned above are filled with an aqueous solution comprising a (co)polymer as defined above at a concentration Cₚₒₗ and a salt at a concentration Cₓ, wherein the concentration of salt Cₓ is different between each well.

Advantageously, the aggregation temperature of the (co)polymer inside the aqueous solution is varying with the salt concentration. The higher the salt concentration, the lower the aggregation temperature of the (co)polymer.

When the temperature increases until reaching the aggregation temperature of the (co)polymer in the aqueous solution, the (co)polymer starts aggregating and the aqueous solution becomes cloudy.

If the temperature subsequently decreases below the aggregation temperature of the (co)polymer in solution, the (co)polymer remains aggregated and the solution remains cloudy. Only when the temperature has decreased to the clearing temperature (equal to the aggregation temperature minus the hysteresis) does the (co)polymer become soluble and the solution becomes clear.

Thus, for temperatures greater than the clearing temperature of the solution, the (co)polymer solution retains a memory of its thermal history by staying aggregated. If the (co)polymer solution is cloudy, this indicates that at some point in its history it has been heated to above its aggregation temperature.

In a typical example, a solution of 5 mg/ml poly-(L)-Proline in 0.5M aqueous NaCl solution is heated to 58°C or higher, at which point it becomes turbid. On cooling to room temperature (25°C), the solution remains turbid, indicating that at some point in its history it has been heated to at least 58°C. The thermometer is then reset by cooling to 4°C, at which temperature the polymer returns to its original, soluble state and the solution becomes clear.

The process of the invention also includes a step wherein the maximal temperature reached is determined by comparing the aqueous solutions, which are cloudy and have been above their cloud point temperature to those which remain clear.

Advantageously, the use of multiple wells with different salt concentrations corresponding to different aggregation temperatures allows greater precision in determining the maximal temperature reached by the aqueous solutions.

The present invention relates to a process for measuring the maximal temperature Tmax at which an object has been put.

Thus, said object was put at a maximal temperature of Tmax and the aim of this process is to determine the value of Tmax.

This process includes the use of device made of a series of n wells containing a thermoresponsive polymer as defined above and different concentrations of salt as defined above, giving different aggregation temperatures, such that the aggregation temperature (T1) of well 1 is greater than that of well 2 (T2), which in turn is greater than that of well 3 (T3), and so on.

As the above object was placed at Tmax with the device, all wells of the device with aggregation temperatures less than Tmax become turbid, while those whose aggregation temperature is greater than Tmax remain clear.

The maximum temperature Tmax reached is thus greater than or equal to the maximum aggregation temperature of the wells that became turbid, and less than the minimum aggregation temperature of the wells that remained clear.

Then, on cooling the entire system below the clearing point temperature, all wells become clear and the system can be reused.

### FIGURES DESCRIPTION

Figure 1 displays the characterizations of PLP50 deduced from a) NMR and b) SEC analysis and c) its hysteretic thermoresponsive behavior monitored by turbidimetry.
Figure 2 shows the influence of PLP50 concentration in aqueous solution on its hysteretic thermoresponsive behavior.
Figure 3 displays the characterizations of PDP100 deduced from a) NMR and b) SEC analysis and c) its hysteretic thermoresponsive behavior monitored by turbidimetry.
Figure 4 displays the characterizations of P(LP-co-glycine) deduced from a) NMR and b) its hysteretic thermoresponsive behavior monitored by turbidimetry.
Figure 5 displays the characterizations of PEG-PLP deduced from a) NMR and b) SEC analysis and c) its hysteretic thermoresponsive behavior monitored by turbidimetry.
Figure 6 displays the hysteretic thermoresponsive behavior monitored by turbidimetry of PLP with different molar masses.
Figure 7 displays the hysteretic thermoresponsive behavior monitored by turbidimetry of PLP with different end-group extremities.
Figure 8 shows the stability of PLP50 aggregates overtime when kept at *T>T_{CL}* and their resolubilization when cooled to *T≈T_{CL}.*
Figure 9 shows the re-programmability of the hysteresis of PLP50 when submitted to repetitive thermal cycles, with a) slow and b) quick ramps.
Figure 10 shows a) the heating ramps of PLP50 samples with several salt concentrations and b) the effect of salt concentration (NaCl) on the *T_{CP}* of PLP50 as a function of salt concentration.
Figure 11 shows the thermometer experience with different solutions of PLP50 varying only the NaCl concentration. All samples were heated to the temperatures indicated, stabilized for 5 minutes and a picture of the whole series was taken at room temperature. The stars highlight the working range of this thermometer.
Figure 12 shows the thermometer experience with different solutions of PLP50 varying only the (NH₄)₂SO₄ concentration. All samples were heated to the temperatures indicated, stabilized for 5 minutes and a picture of the whole series was taken at room temperature. The stars highlight the working range of this thermometer.
Figure 13 shows the thermometer experience with different solutions of PLP50 varying only the CaCl₂ concentration. All samples were heated to the temperatures indicated, stabilized for 5 minutes and a picture of the whole series was taken at room temperature. The stars highlight the working range of this thermometer.

### EXAMPLES:

### Example 1: Synthesis and hysteresis of PLP50

L-Proline *N*-Carboxyanhydride (L-Pro-NCA) monomer was purchased from PMC Isochem, stored at -20 °C under argon atmosphere and weighed in the glove box Jacomex GP13 no. 2675 at the Laboratoire de Chimie des Polymères Organique (LCPO, Bordeaux, France). Solvents and other chemicals were purchased from Sigma Aldrich. Dry acetonitrile (ACN) was obtained from a solvent system purifier (PureSolv, Innovative Technology), kept under argon atmosphere and freshly used. Ultrapure water was obtained from a Purelab Prima purification system (ELGA) with a resistivity of 18.2 MΩ cm⁻¹. Hexylamine was freeze-thawed and cryo-distilled on the Schlenk line prior to use. Dialysis membranes were purchased from SpectrumLabs.

L-Pro-NCA (100 mg, 71*10⁻² mmol, 50 eq) was introduced in a flame-dried Schlenk equipped with a stirrer and suspended in 0.5 ml of dry ACN. Hexylamine (1.43 mg, 1.4*10⁻² mmol, 1eq) dissolved in 1.5 ml H₂O: ACN (1:1) at 10°C then was added to the first solution to start the ROP under vigorous stirring. The solution became quickly clear, and bubbling was observed. Once the reaction was completed, the mixture was dialyzed against ultrapure water in a 100-500 Da RC dialysis membrane to remove all unreacted monomers and solvent. After lyophilization, a white powder was recovered with a yield of 90%.

The white powder was then dissolved in ultrapure water at a concentration of 5 mg/mL.

This solution was monitored by UV-vis spectroscopy at a wavelength of 550 nm and heated according to the following program:
1- 10 min isotherm at 10°C
2- 1°C/min ramp to 85°C
3- 10 min isotherm at 85°C
4- 1°C/min ramp to 10°C

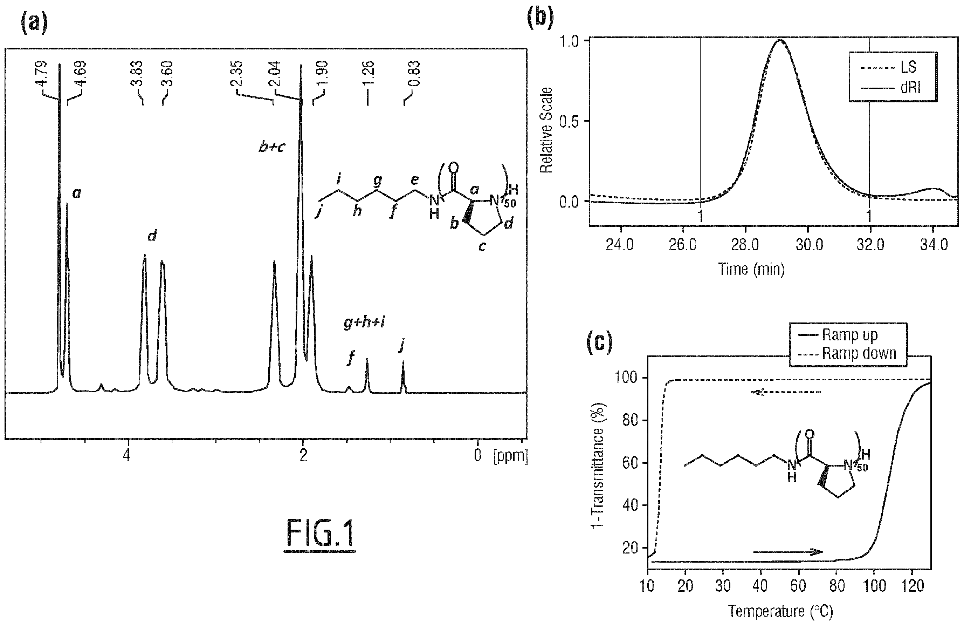

Data were collected on a Cary 100 UV-Vis spectrophotometer equipped with a temperature controller from Agilent Technologies. 1-Transmittance was plotted in function of temperature, with isotherms' data not collected. The cloud point temperature (*T_{CP}*) and the clearing point temperature (*T_{CL}*) of PLP50 in this aqueous solution were defined respectively as the temperature at the inflection point of the transmittance-temperature curves during heating and cooling ramps. The width of hysteresis (*X_{H}*) was calculated as the difference of these temperatures (Figure 1).

### Example 2: Hysteresis of PLP50 at various concentrations

PLP50 was dissolved in ultrapure water at several concentrations: 5, 2, 1 and 0.5 mg/mL. These solutions were then monitored by UV-vis spectroscopy at a wavelength of 550 nm and heated according to the following program:
1- 10 min isotherm at 10°C
2- 1°C/min ramp to 85°C
3- 10 min isotherm at 85°C
4- 1°C/min ramp to 10°C

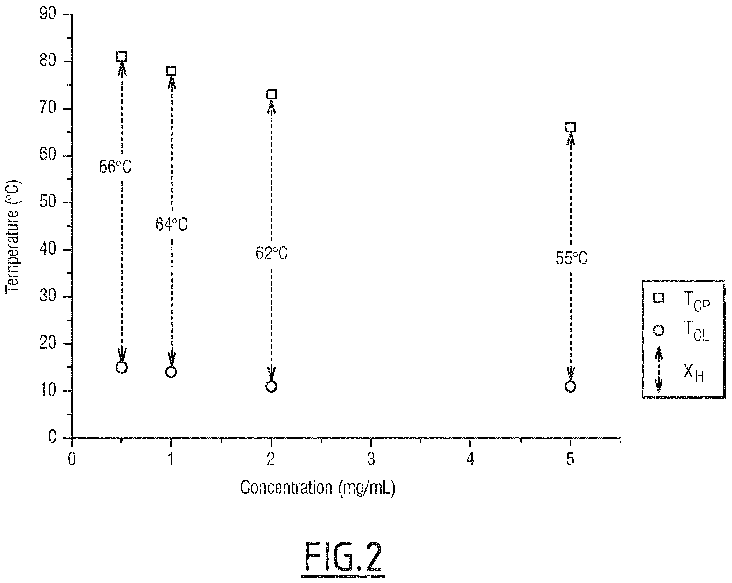

Data were collected on a Cary 100 UV-Vis spectrophotometer equipped with a multicell thermoelectric temperature controller from Agilent Technologies. For each solution 1-Transmittance was plotted in function of temperature, with isotherms' data not collected. For each solution, the cloud point temperature (*T_{CP}*) and the clearing point temperature (*T_{CL}*) of PLP50 were defined respectively as the temperature at the inflection point of the transmittance-temperature curves during heating and cooling ramps. The width of hysteresis (*X_{H}*) was calculated as the difference of these temperatures (Figure 2).

### Example 3: Synthesis and hysteresis of PDP100

D-Proline *N*-Carboxyanhydride (D-Pro-NCA) monomer was purchased from PMC Isochem, stored at -20 °C under argon atmosphere and weighed in the glove box Jacomex GP13 no. 2675 at the Laboratoire de Chimie des Polymères Organique (LCPO, Bordeaux, France). Solvents and other chemicals were purchased from Sigma Aldrich. Dry acetonitrile (ACN) was obtained from a solvent system purifier (PureSolv, Innovative Technology), kept under argon atmosphere and freshly used. Ultrapure water was obtained from a Purelab Prima purification system (ELGA) with a resistivity of 18.2 MΩ cm⁻¹. Hexylamine was freeze-thawed and cryo-distilled on the Schlenk line prior to use. Dialysis membranes were purchased from SpectrumLabs.

*D*-Pro-NCA (100 mg, 71*10⁻² mmol, 100 eq) was introduced in a flame-dried Schlenk equipped with a stirrer and suspended in 0.5 ml of dry ACN. Hexylamine (1.43 mg, 1.4*10⁻² mmol, 1eq) dissolved in 1.5 ml H₂O: ACN (1:1) at 10°C was added to the first solution to start the ROP under vigorous stirring. The solution became clear quickly and bubbling was observed. Once the reaction was completed, the mixture was dialyzed against ultrapure water in a 100-500 Da dialysis membrane to remove all unreacted monomers and solvent. After lyophilization, a white powder was recovered with a yield of 75%.

The white powder was then dissolved in ultrapure water at a concentration of 5 mg/mL.

This solution was then monitored by UV-vis spectroscopy at a wavelength of 550 nm and heated according to the following program:
1- 10 min isotherm at 10°C
2- 1°C/min ramp to 85°C
3- 10 min isotherm at 85°C
4- 1°C/min ramp to 10°C

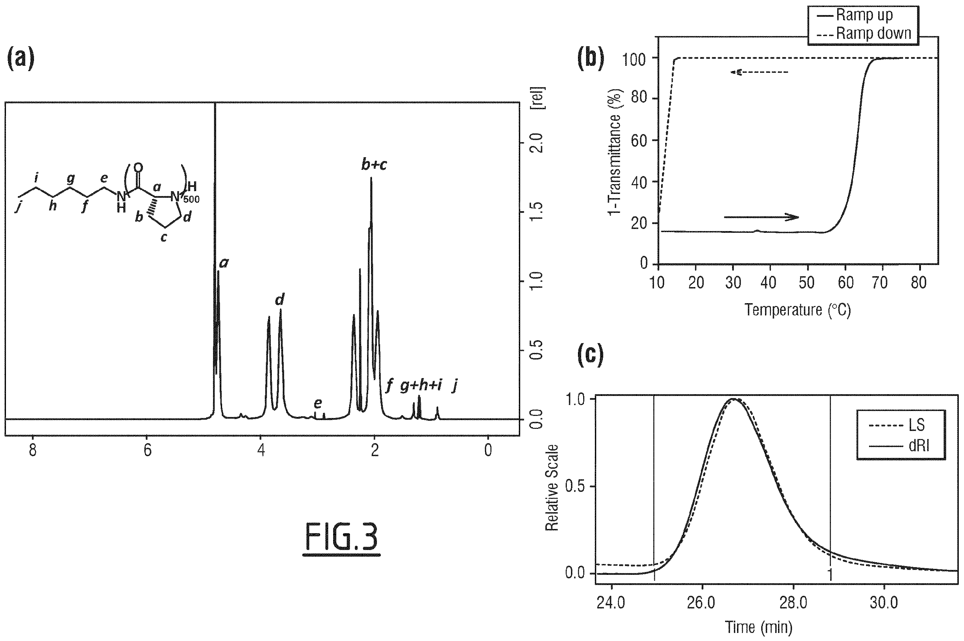

Data were collected on a Cary 100 UV-Vis spectrophotometer equipped with a temperature controller from Agilent Technologies. 1-Transmittance was plotted in function of temperature, with isotherms' data not collected. The cloud point temperature (*T_{CP}*) and the clearing point temperature (*T_{CL}*) of PDP100 in this aqueous solution were defined respectively as the temperature at the inflection point of the transmittance-temperature curves during heating and cooling ramps. The width of hysteresis (*X_{H}*) was calculated as the difference of these temperatures (Figure 3).

### Example 4: Synthesis and hysteresis of P(LP-co-glycine)

L-Proline *N*-Carboxyanhydride (L-Pro-NCA) monomer was purchased from PMC Isochem, stored at -20 °C under argon atmosphere and weighed in the glove box Jacomex GP13 no. 2675 at the Laboratoire de Chimie des Polymères Organique (LCPO, Bordeaux, France). Solvents and other chemicals were purchased from Sigma Aldrich. Dry acetonitrile (ACN) was obtained from a solvent system purifier (PureSolv, Innovative Technology), kept under argon atmosphere and freshly used. Ultrapure water was obtained from a Purelab Prima purification system (ELGA) with a resistivity of 18.2 MΩ cm⁻¹. Benzylamine was freeze-thawed and cryo-distilled on the Schlenk line prior to use. Dialysis membranes were purchased from Spectrum Labs.

Glycine *N*-Carboxyanhydride (Gly-NCA) was synthesized using the following procedure: In a clean and previously dried Schlenk flask N-Boc-glycine (2 g, 11.4 mmol, 1 equiv.) was dried during 15 min on the Schlenk line, then 32 mL of anhydrous THF were added, followed with thionyl chloride (1 mL, 13.7 mmol, 1.2 equiv.). The reaction was stirred for 4 h at RT. The solvent was evaporated using vacuum Schlenk line, washed three times with 35 mL of anhydrous hexane, the suspension was filtered using a cannula and the powder was dried. Then 90 mL of anhydrous ethyl acetate were added, and the suspension was filtered over previously dried Celite. The system was washed with 60 mL of anhydrous ethyl acetate and the solution concentrated. The solution was filtered again over previously dried Celite and the system washed with 60 ml of anhydrous ethyl acetate. The solid was washed two times with 10 mL of dry diethyl ether and dried. The product was isolated as a white yellowish crystalline powder in 79% yield (700 mg). ¹H-NMR, DMSO-d6 400 MHz δ: 4.20 (s, 2H, CH2), 8.83 (s, 1H, NH). 13C-NMR, DMSO-d6 400 MHz δ: 46.26 (s, CH2), 153.97 (s, NCOO), 169.40 (s, COO).

*L*-Pro-NCA (60 mg, 0.43 mmol, 50 eq) and Gly-NCA (43 mg, 0.43 mmol, 50 eq) were introduced in a flame-dried Schlenk equipped with a stirrer and suspended in 1 ml of dry ACN. Benzylamine (0.91 mg, 0.009 mmol, 1 eq) was dissolved in 1 ml H₂O at 10°C then added to the first solution to start the ROP under vigorous stirring. The solution became clear at first then became cloudy. Bubbling was also observed. Once the reaction was completed, the mixture was dialyzed against ultrapure water in a 100-500 Da dialysis membrane to remove all unreacted monomers and solvent. After lyophilization, a white/yellowish powder was recovered with a yield of 87%.

The powder was then dissolved in ultrapure water at a concentration of 5 mg/mL.

This solution was then monitored by UV-vis spectroscopy at a wavelength of 550 nm and heated according to the following program:
1- 10 min isotherm at 10°C
2- 1°C/min ramp to 85°C
3- 10 min isotherm at 85°C
4- 1°C/min ramp to 10°C

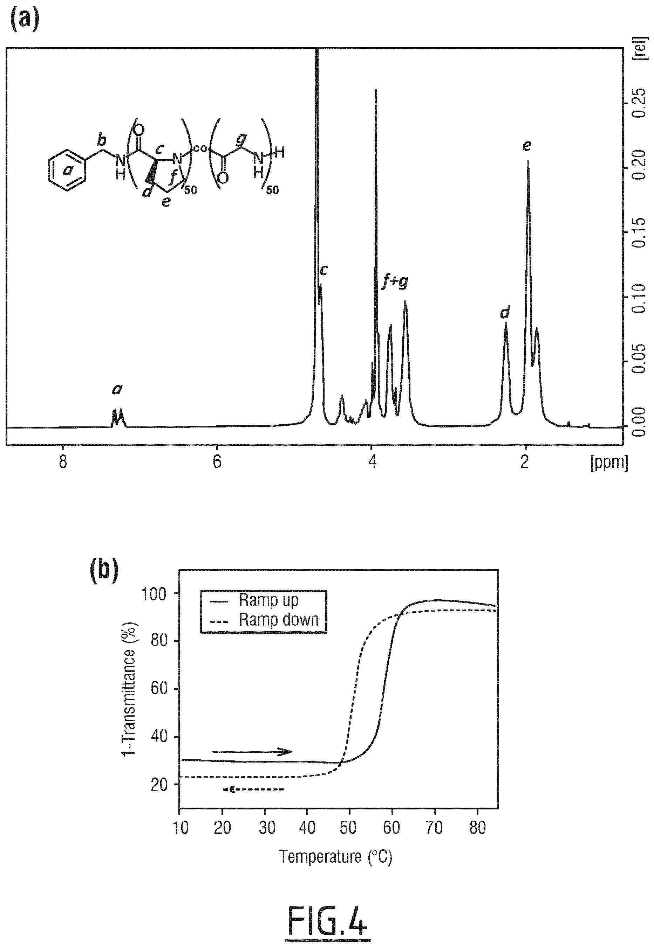

Data were collected on a Cary 100 UV-Vis spectrophotometer equipped with a temperature controller from Agilent Technologies. 1-Transmittance was plotted in function of temperature, with isotherms' data not collected. The cloud point temperature (*T_{CP}*) and the clearing point temperature (*T_{CL}*) of P(LP-co-glycine) in aqueous solution were defined respectively as the temperature at the inflection point of the transmittance-temperature curves during heating and cooling ramps. The width of hysteresis (*X_{H}*) was calculated as the difference of these temperatures (Figure 4).

### Example 5: Synthesis and hysteresis of PEG-PLP

L-Proline *N*-Carboxyanhydride (L-Pro-NCA) monomer was purchased from PMC Isochem, stored at -20 °C under argon atmosphere and weighed in the glove box Jacomex GP13 no. 2675 at the Laboratoire de Chimie des Polymères Organique (LCPO, Bordeaux, France). CH₃-PEG-NH₂ 5k was purchased from RAPP Polymere GmbH and stored sealed at -20°C and thawed before use. Solvents and other chemicals were purchased from Sigma Aldrich. Dry acetonitrile (ACN) was obtained from a solvent system purifier (PureSolv, Innovative Technology), kept under argon atmosphere and freshly used. Ultrapure water was obtained from a Purelab Prima purification system (ELGA) with a resistivity of 18.2 MΩ cm⁻¹. Hexylamine was freeze-thawed and cryo-distilled on the Schlenk line prior to use. Dialysis membranes were purchased from SpectrumLabs.

L-Pro-NCA (100 mg, 0.71 mmol, 50 eq) monomer was introduced in a flame-dried Schlenk equipped with a stirrer and suspended in 1 ml of dry ACN. CH₃-PEG-NH₂ 5k (100 mg, 0.014 mmol, 1 eq) was dissolved in 1 ml H₂O at 10°C then added to the first solution to start the ROP under vigorous stirring. The solution became quickly clear and bubbling was also observed. Once the reaction was completed, the mixture was dialyzed against ultrapure water in a 1 kDa dialysis membrane to remove all unreacted monomers and solvent. After lyophilization, a white/yellowish powder was recovered with a yield of 58%.

The white powder was then dissolved in ultrapure water at a concentration of 5 mg/mL.

This solution was then monitored by UV-vis spectroscopy at a wavelength of 550 nm and heated according to the following program:
1- 10 min isotherm at 10°C
2- 1°C/min ramp to 85°C
3- 10 min isotherm at 85°C
4- 1°C/min ramp to 10°C

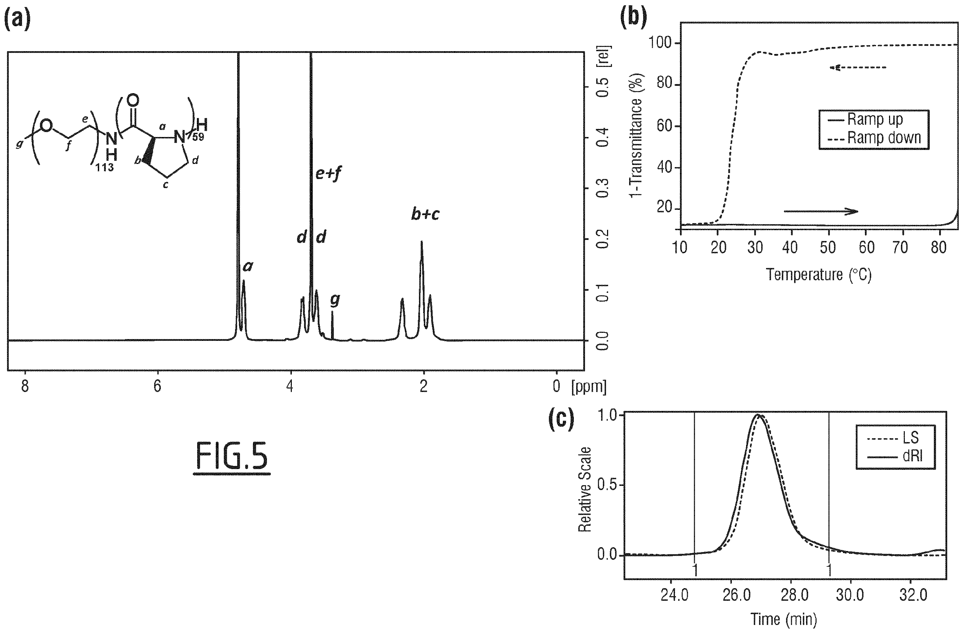

Data were collected on a Cary 100 UV-Vis spectrophotometer equipped with a temperature controller from Agilent Technologies. 1-Transmittance was plotted in function of temperature, with isotherms' data not collected. The cloud point temperature (*T_{CP}*) and the clearing point temperature (*T_{CL}*) of PEG-PLP in this aqueous solution were defined respectively as the temperature at the inflection point of the transmittance-temperature curves during heating and cooling ramps. The width of hysteresis (*X_{H}*) was calculated as the difference of these temperatures (Figure 5).

### Example 6: Synthesis and hysteresis of PLP with different molar masses

L-Proline *N*-Carboxyanhydride (L-Pro-NCA) monomers were purchased from PMC Isochem, stored at -20 °C under argon atmosphere and weighed in the glove box Jacomex GP13 no. 2675 at the Laboratoire de Chimie des Polymères Organique (LCPO, Bordeaux, France). Solvents and other chemicals were purchased from Sigma Aldrich. Dry acetonitrile (ACN) was obtained from a solvent system purifier (PureSolv, Innovative Technology), kept under argon atmosphere and freshly used. Ultrapure water was obtained from a Purelab Prima purification system (ELGA) with a resistivity of 18.2 MΩ cm⁻¹. Hexylamine was freeze-thawed and cryo-distilled on the Schlenk line prior to use. Dialysis membranes were purchased from SpectrumLabs.

*L*-Pro-NCA (100 mg, 71*10⁻² mmol, 50 eq) was introduced in a flame-dried Schlenk equipped with a stirrer and suspended in 0.5 ml of dry ACN. The necessary amount of hexylamine (according to the M/I ratios: 20, 30, 50, 70, 100 and 200) was dissolved in 1.5 ml H₂O: ACN (1:1) at 10°C was added to the first solution to start the ROP under vigorous stirring. The solutions became clear quickly and bubbling was observed. The reaction mixtures were dialyzed against ultrapure water in a 100-500 Da dialysis membranes to remove all unreacted monomers and solvent. After lyophilization, white powders were recovered with a yield of between 43 and 90%

**(Table 1).**

| **Polymer** | **Initiator** | **Theoretical DP** | **DP by NMR** *^{a}* | ***Mₙ* (g/mol) by SEC** ^{b} | **Ð** ^{b} |
|---|---|---|---|---|---|
| **Example 6** | | | | | |
| **1** | Hexylamine | 5 | 5 | 900 | 1.24 |
| **2** | | 20 | 18 | 2440 | 1.03 |
| **3** | | 30 | 30 | 4000 | 1.08 |
| **4** | | 50 | 60 | 4860 | 1.01 |
| **5** | | 70 | 64 | 7830 | 1.03 |
| **6** | | 100 | 120 | 12400 | 1.02 |
| **7** | | 200 | 230 | 20100 | 1.04 |

| | | | | | |
|---|---|---|---|---|---|
| *^{a} Calculated by dividing the integration of protons in the backbone of the polymer by those in the initiator. ^{b} Absolute average molar mass (Mw) and dispersity (Ð) determined by SEC using a multi-angle static light scattering detection* | | | | | |

All the white powder were then dissolved in ultrapure water at a concentration of 5 mg/mL. Solutions were then monitored by UV-vis spectroscopy at a wavelength of 550 nm and heated according to the following program:
1- 10 min isotherm at 10°C
2- 1°C/min ramp to 85°C
3- 10 min isotherm at 85°C
4- 1°C/min ramp to 10°C

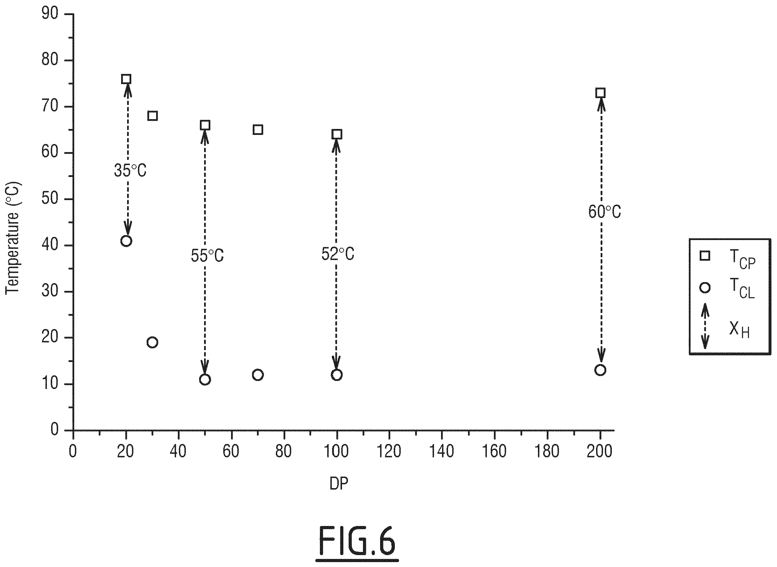

Data were collected on a Cary 100 UV-Vis spectrophotometer equipped with a temperature controller from Agilent Technologies. 1-Transmittance was plotted in function of temperature, with isotherms' data not collected. The cloud point temperature (*T_{CP}*) and the clearing point temperature (*T_{CL}*) of PLP in these aqueous solutions were defined respectively as the temperature at the inflection point of the transmittance-temperature curves during heating and cooling ramps. The width of hysteresis (*X_{H}*) was calculated as the difference of these temperatures (Figure 6).

### Example 7: Synthesis and hysteresis of PLP with different end-group extremities

L-Proline *N*-Carboxyanhydride (L-Pro-NCA) monomers were purchased from PMC Isochem, stored at -20 °C under argon atmosphere and weighed in the glove box Jacomex GP13 no. 2675 at the Laboratoire de Chimie des Polymères Organique (LCPO, Bordeaux, France). Solvents and other chemicals were purchased from Sigma Aldrich. Dry acetonitrile (ACN) was obtained from a solvent system purifier (PureSolv, Innovative Technology), kept under argon atmosphere and freshly used. Ultrapure water was obtained from a Purelab Prima purification system (ELGA) with a resistivity of 18.2 MΩ cm⁻¹. Hexylamine, Allylamine and 2-(2-Aminoethoxy) ethanol were freeze-thawed and cryo-distilled on the Schlenk line prior to use. Dialysis membranes were purchased from Spectrum Labs.

*L*-Pro-NCA (100 mg, 71*10⁻² mmol, 20 eq) was introduced in a flame-dried Schlenk equipped with a stirrer and suspended in 0.5 ml of dry ACN. The necessary amount of initiator was dissolved in 1.5 ml H₂O: ACN (1:1) at 10°C and added to the first solution to start the ROP under vigorous stirring. The solutions became clear quickly and bubbling was observed. The reaction mixtures were dried under vacuum, white powders were recovered with a yield between 50 and 70% (Table 2).

| **Polymer** | **Initiator** | **Theoretical DP** | **DP by NMR** *^{a}* | ***M̅ₙ̅* (g/mol) by SEC** ^{b} | **Ð** ^{b} |
|---|---|---|---|---|---|
| **Example 7** | | | | | |
| **1** | Hexylamine | 20 | 18 | 2440 | 1.03 |
| **2** | Allylamine | 20 | 19 | 1340 | 1.04 |
| **3** | 2-(2-Aminoethoxy) ethanol | 20 | End chains not easily identifiable by NMR | 1515 | 1.04 |

| | | | | | |
|---|---|---|---|---|---|
| *^{a} Calculated by dividing the integration of protons in the backbone of the polymer by those in the initiator. ^{b} Absolute average molar mass (Mw) and dispersity (Ð) determined by SEC using a multi-angle static light scattering detection* | | | | | |

All the white powder were then dissolved in ultrapure water at a concentration of 5 mg/mL. Solutions were then monitored by UV-vis spectroscopy at a wavelength of 550 nm and heated according to the following program:
1- 10 min isotherm at 10°C
2- 1°C/min ramp to 85°C
3- 10 min isotherm at 85°C
4- 1°C/min ramp to 10°C

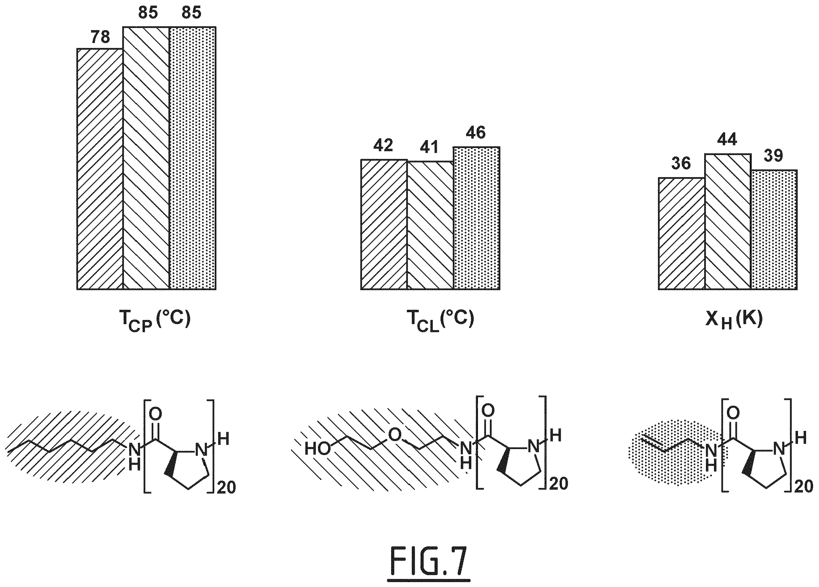

Data were collected on a Cary 100 UV-Vis spectrophotometer equipped with a temperature controller from Agilent Technologies. 1-Transmittance was plotted in function of temperature, with isotherms' data not collected. The cloud point temperature (*T_{CP}*) and the clearing point temperature (*T_{CL}*) of PLP in these aqueous solutions were defined respectively as the temperature at the inflection point of the transmittance-temperature curves during heating and cooling ramps. The width of hysteresis (*X_{H}*) was calculated as the difference of these temperatures (Figure 7).

### Example 8: Stability of the hysteresis of PLP50

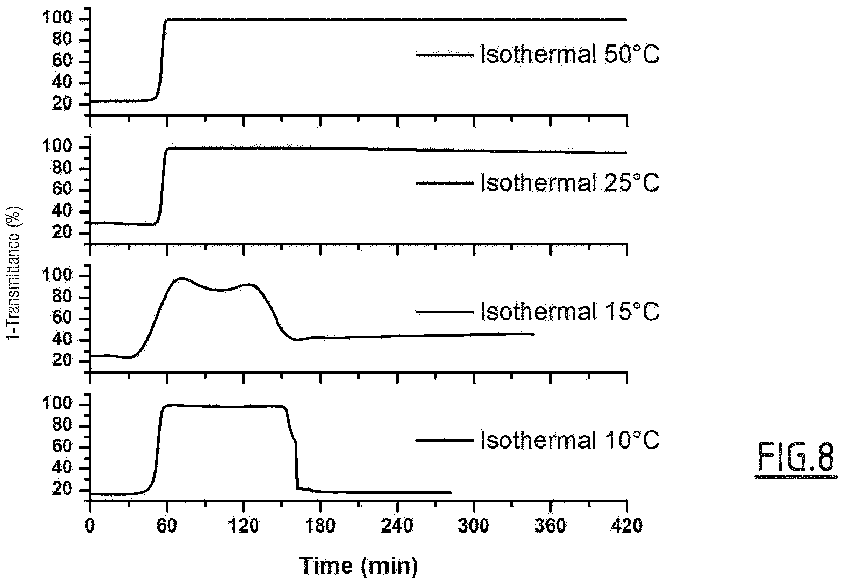

Several aqueous solutions of PLP50 at 5 mg/mL in ultrapure water were prepared. The samples were heated to 85°C and held for 10 min, during which time aggregation occurred. Subsequently the samples were cooled at 1°C/min to several temperatures (50, 25, 15 and 10°C) and held at these temperatures with stirring for up to 4 hours. Solutions were monitored overtime by UV-vis spectroscopy at a wavelength of 550 nm. Data were collected on a Cary 100 UV-Vis spectrophotometer equipped with a temperature controller from Agilent Technologies. 1-Transmittance was plotted in function of time (Figure 8).

### Example 9: Reprogramming the hysteresis of PLP50 (2 times, slow and 6 times quick)

Two solutions of PLP50 at 5 mg/mL in ultrapure water were prepared. The re-programmability of the hysteresis was highlighted by UV-vis spectroscopy at a wavelength of 550 nm.

The first solution was heated according to the following program and repeated two times:
1- 10 min isotherm at 10°C
2- 1°C/min ramp to 85°C
3- 10 min isotherm at 85°C
4- 1°C/min ramp to 10°C
5- 10 min isotherm at 10°C

Data were collected on a Cary 100 UV-Vis spectrophotometer equipped with a temperature controller from Agilent Technologies. 1-Transmittance was plotted in function of temperature, with isotherms' data not collected. For both thermal cycles, the cloud point temperature (*T_{CP}*) and the clearing point temperature (*T_{CL}*) of PLP were defined respectively as the temperature at the inflection point of the transmittance-temperature curves during heating and cooling ramps. The width of hysteresis (*X_{H}*) was calculated as the difference of these temperatures.

The second solution and heated according to the following program that was repeated 5 times:
1- 10 min isotherm at 10°C
2- 10°C/min ramp to 85°C
3- 10 min isotherm at 85°C
4- 10°C/min ramp to 10°C
5- 10 min isotherm at 10°C

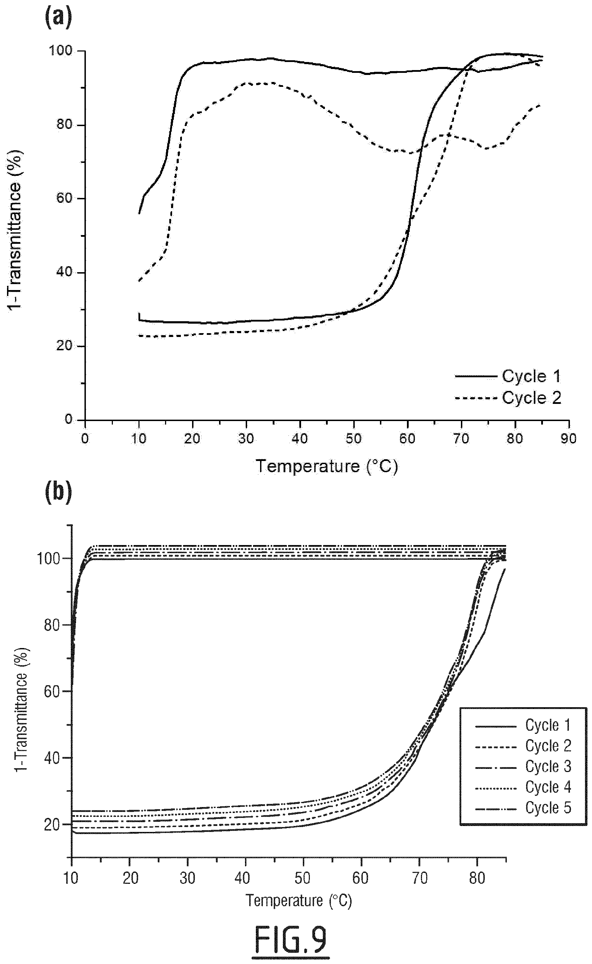

Data were collected on a Cary 100 UV-Vis spectrophotometer equipped with a temperature controller from Agilent Technologies. 1-Transmittance was plotted in function of temperature, with isotherms' data not collected. For each thermal cycle, the cloud point temperature (*T_{CP}*) and the clearing point temperature (*T_{CL}*) of PLP were defined respectively as the temperature at the inflection point of the transmittance-temperature curves during heating and cooling ramps. The width of hysteresis (*X_{H}*) was calculated as the difference of these temperatures (Figure 9).

### Example 10: Effect of salts on the hysteresis of PLP50 (NaCl)

Samples of PLP50 at a concentration fixed at 5 mg/mL were prepared varying the concentration of salt (NaCl) in aqueous solutions from 0 to 1 M.

These solutions were then monitored by UV-vis spectroscopy at a wavelength of 550 nm and linearly heated, following heating program:
1- 10 min isotherm at 10°C
2- 1°C/min ramp to 85°C
3- 10 min isotherm at 85°C
4- 1°C/min ramp to 10°C

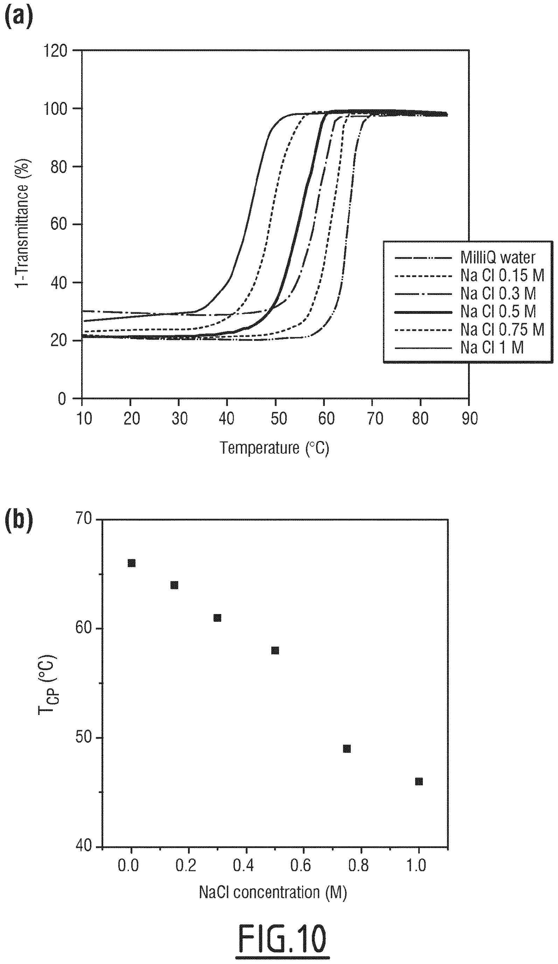

Data were collected on a Cary 100 UV-Vis spectrophotometer equipped with a temperature controller from Agilent Technologies. 1-Transmittance was plotted in function of temperature, with isotherms' data not collected. The cloud point temperature (*T_{CP}*) of PLP50 in aqueous solutions was defined as the temperature at the inflection point of the transmittance-temperature curves during heating ramps (Figure 10).

### Example 11: Thermometer using aqueous solutions of PLP50 (NaCl)

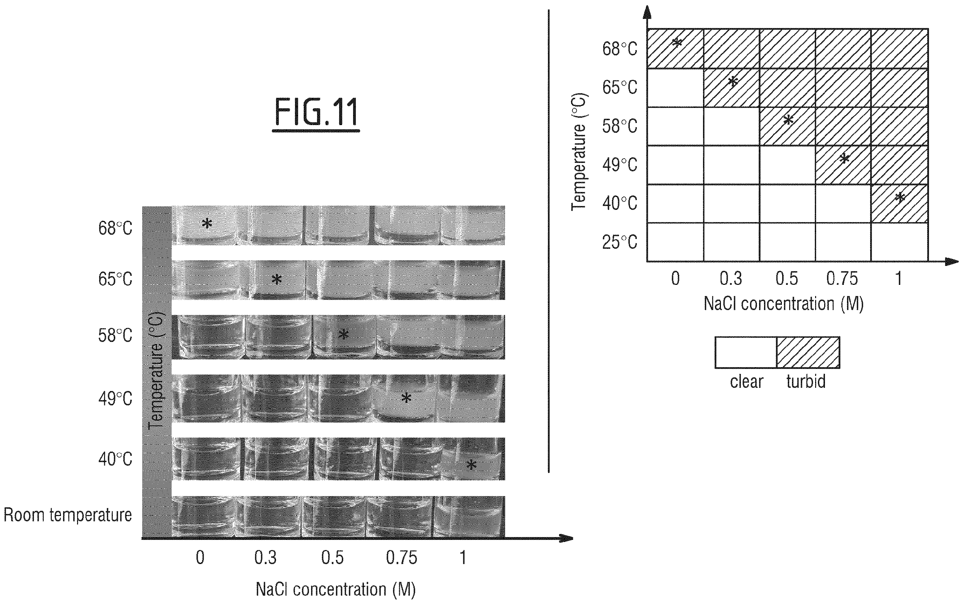

Samples of PLP50 at a concentration fixed at 5 mg/mL were prepared varying the concentration of salt (NaCl) in aqueous solutions from 0 to 1 M. All samples were then heated in an oil bath from room temperature to 40, 49, 58, 65 and 68°C. When the selected temperature was reached, samples were stabilized for 5 minutes, and a picture of the whole series was taken at room temperature (Figure 11).

### Example 12: Thermometer using aqueous solutions of PLP50 ((NH₄)₂SO₄)

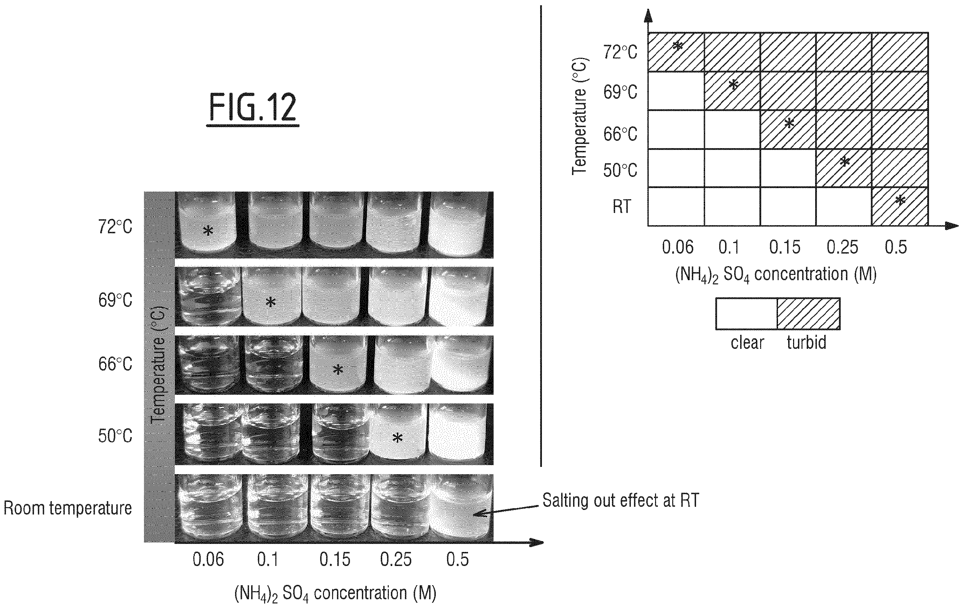

Samples of PLP50 at a concentration fixed at 5 mg/mL were prepared varying the concentration of salt ((NH₄)₂SO₄) in aqueous solutions from 0.06 to 0.5 M. All samples were then heated in an oil bath from room temperature to 50, 66, 69 and 72°C. When the selected temperature was reached, samples were stabilized for 5 minutes, and a picture of the whole series was taken at room temperature (Figure 12).

### Example 13: Thermometer using aqueous solutions of PLP50 (CaCl₂)

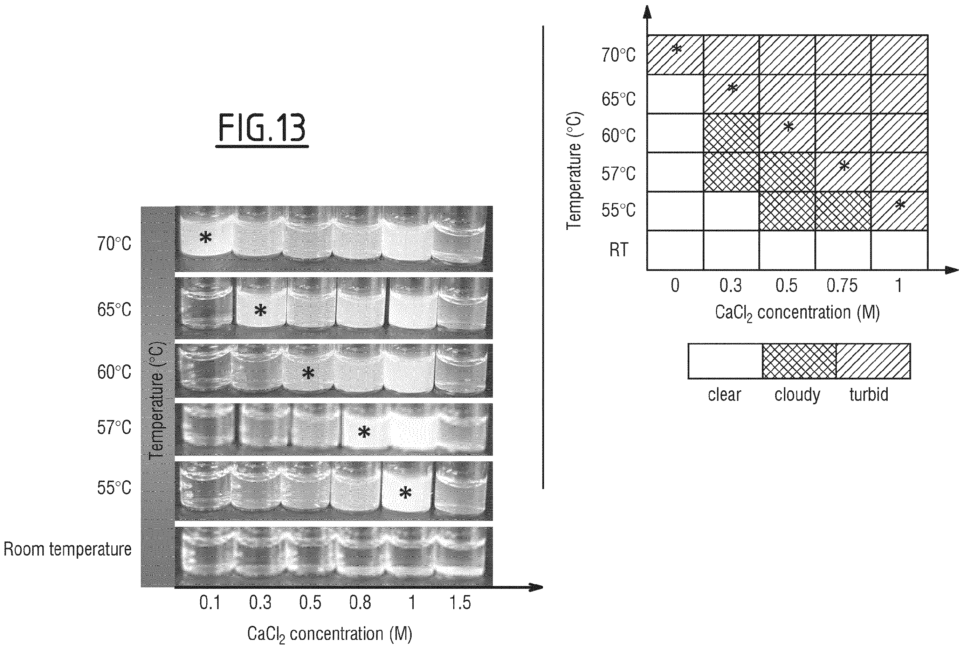

Samples of PLP50 at a concentration fixed at 5 mg/mL were prepared varying the concentration of salt (CaCl₂) in aqueous solutions from 0.1 to 1.5 M. All samples were then heated in an oil bath from room temperature to 55, 57, 60, 65 and 70°C. When the selected temperature was reached, samples were stabilized for 5 minutes, and a picture of the whole series was taken at room temperature (Figure 13).

## Claims

1. An aqueous solution comprising at least one synthetic (co)polymer, wherein said (co)polymer comprises at least one (L)-proline or (D)-proline monomer unit, wherein said (co)polymer exhibits a temperature-driven phase change involving aggregation on heating which is reversible on cooling and has a hysteresis greater than or equal to 20°C.

2. The aqueous solution according to claim 1, wherein the concentration of the (co)polymer in said aqueous solution is from 0.1 mg.mL⁻¹ to 200 mg.mL⁻¹, preferably from 0.5 mg.mL⁻¹ to 20 mg.mL⁻¹.

3. The aqueous solution according to claim 1 or 2, further comprising at least one salt.

4. The aqueous solution according to claim 3, wherein the salt is a combination of an anion selected from the group consisting of: F⁻, SO₄²⁻, HPO₄²⁻, C₂H₃O²⁻, Cl⁻, Br⁻, NO³⁻, ClO³⁻, I⁻, ClO⁴, and SCN,⁻ and a cation selected from the group consisting of: NH₄⁺, K⁺, Na⁺, Li⁺, Mg²⁺, Ca²⁺, and guanidinium.

5. The aqueous solution according to claim 3 or 4, wherein the salt is sodium chloride.

6. The aqueous solution according to any one of claims 3 to 5, wherein the concentration of the salt is less than 3M.

7. The aqueous solution according to any one of claims 1 to 6, wherein the (co)polymer comprises the following moiety: 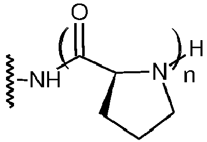 wherein n is an integer from 10 to 1 000, preferably from 20 to 500;

8. The aqueous solution according to any one of claims 1 to 7, wherein the (co)polymer has the formula (I): 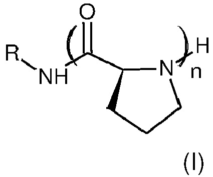 wherein:
- n is an integer from 10 to 1 000, preferably from 20 to 500; and
- R is an aromatic, cycloaliphatic, heterocyclic or aliphatic group.

9. The aqueous solution according to claim 8, wherein R in formula (I) is an hexyl, allyl, benzyl or -CH₂CH₂OCH₂CH₂OH group, or a polyethylene glycol moiety -(OCH₂CH₂)ₘ, m being an integer comprised from 2 to 250.

10. The aqueous solution according to any one of claims 1 to 9, wherein the molecular weight of the (co)polymer is from 900 g.mol⁻¹ to 200 000 g.mol⁻¹, preferably from 1 900 g.mol⁻¹ to 50 000 g.mol⁻¹.

11. The aqueous solution according to any one of claims 1 to 10, wherein the degree of polymerization (DP) of the (co)polymer is from 10 to 1 000, preferably from 20 to 500.

12. The use of a (co)polymer comprising at least one (L)-proline or (D)-proline monomer unit as defined in anyone of claims 1, 2 and 7 to 11, as a thermometer, for measuring the maximal temperature at which the aqueous solution of said (co)polymer as defined in any one of claims 1 to 11 according has been put.

13. A device for measuring the temperature at which an object has been put, said device including at least one well filled with the aqueous solution of claim 3.
